# EUROPEAN PATENT APPLICATION

(11) **EP 4 790 525 A1**
(43) Date of publication of application: **12.08.2026**
(21) Application number: 25156922.4
(22) Date of filing: 10.02.2025
(51) Int. Cl.: G06F 3/03, G06F 3/033, G06F 3/0354

(54) **OPTICAL TRACKING DEVICE AND A METHOD OF OPERATION THEREOF**

(71) Applicant: EM Microelectronic-Marin SA, 2074 Marin (CH)
(72) Inventor: SABY, Jérôme, 2022 Bevaix (CH); FARRELL, Josh, Colorado Springs, 80924 (US); SCHLACHTER, Jérémy, 1584 Villars-le-Grand (CH)
(74) Representative: ICB SA

(57) **Abstract**

The present disclosure relates to an optical tracking device and a method of operation thereof, comprising emitting light towards a surface by a light source at regular first intervals of a first frequency with a first predetermined duration; receiving light reflected from the surface by an image sensor; determining image arrays from the light received by the image sensor at the regular first intervals, the image arrays comprising a first plurality of pixels; generating a first comparison array between the first image arrays generated at subsequent first intervals; determining a first displacement amount based on the first comparison array; wherein, if the first displacement amount is bigger than a displacement amount threshold, the method further comprises: emitting light towards the surface at regular second intervals of a second frequency with a second predetermined duration, determining second image arrays from the light received by the image sensor at the regular second intervals, the second image arrays comprising a plurality of pixels, generating a second comparison array between the second image arrays generated at subsequent second intervals, determining a second displacement amount based on the second comparison array.

## Description

### Technical field

The present disclosure relates to the field of optical tracking devices, i.e. optical mice, optical touchscreens or other peripherals.

### Background of the invention

In the field of optical tracking devices, both a high accuracy and response rate is desired to provide an improved user experience, while the energy consumption should be kept as low as possible to extend the battery life of the mobile devices powering them or of the integrated batteries.

A usual term to define the frame activity of optical sensors present in optical tracking devices is the polling rate. The polling rate defines the minimum frame activity of the sensor and measures how often a device reports its position back to the electronic device or computer it is paired with. This is usually measured in Hertz, with a higher number meaning a shorter delay and higher precision. In order to profit from a higher polling rate, the rate of the regular operation of the sensor is scaled up. With a higher polling rate, the responsiveness of the device, i.e. latency, and the precision of the device is improved. However, the higher the polling rate, higher is the energy consumption and with it the battery life is reduced.

Mouse optical sensors are traditionally using 125 Hz polling rates for office use, wherein gaming and high-quality products comprise polling rates extending from 1 KHz up to 8 KHz, however leading to a higher energy consumption.

As such, there is a need for a highly responsive optical tracking device which solves the above-mentioned problems.

### Summary of the invention

In one aspect of the current disclosure there is provided an optical tracking device comprising a light source configured to emit light towards a surface; an image sensor configured to receive light reflected from the surface; a processing unit configured to: instruct a light source driving unit to drive the light source to generate light at regular first intervals of a first frequency with a first predetermined duration; instruct an image sensor controlling unit to determine image arrays from the light received by the image sensor at the regular first intervals, the first image arrays comprising a first plurality of pixels; instruct a comparator unit to generate a first comparison array between the first image arrays generated at subsequent first intervals; determine a first displacement amount based on the first comparison array; wherein, if the first displacement amount is bigger than a displacement amount threshold, the processing unit is further configured to instruct the light source driving unit to drive the light source to generate light at regular second intervals of a second frequency with a second predetermined duration, instruct the image sensor controlling unit to determine second image arrays from the light received by the image sensor at the regular second intervals, the second image arrays comprising a second plurality of pixels, instruct a comparator unit to generate a second comparison array between the second image arrays generated at subsequent second intervals, determining a second displacement amount based on the second comparison array.

According to a second aspect the comparator unit comprises one comparing unit configured to compare pixel voltages of the first and/or second image array in a first direction and one comparing unit configured to compare pixel voltages of the first and/or second image array in a second direction, perpendicular to the first direction.

According to a third aspect, generating a first comparison array between subsequent arrays generated at the regular first intervals comprises comparing pixel voltages in only one direction.

According to a further aspect, the first and/or second frequencies can be adjusted to a predetermined frequency.

According to a further aspect, the second frequency is determined based on the determined first displacement amount.

According to a further aspect, the second predetermined duration is longer than the first predetermined duration.

In one aspect of the current disclosure there is provided a method of operation of an optical tracking device, comprising: emitting light towards a surface by a light source at regular first intervals of a first frequency with a first predetermined duration; receiving light reflected from the surface by an image sensor; determining image arrays from the light received by the image sensor at the regular first intervals, the image arrays comprising a first plurality of pixels; generating a first comparison array between the first image arrays generated at subsequent first intervals; determining a first displacement amount based on the first comparison array; wherein, if the first displacement amount is bigger than a displacement amount threshold, the method further comprises: emitting light towards the surface at regular second intervals of a second frequency with a second predetermined duration, determining second image arrays from the light received by the image sensor at the regular second intervals, the second image arrays comprising a plurality of pixels, generating a second comparison array between the second image arrays generated at subsequent second intervals, determining a second displacement amount based on the second comparison array.

According to a further aspect, generating a comparison array of the first and/or second image array comprises comparing a pixel voltage in a first direction and/or in a second direction, perpendicular to the first direction.

According to a further aspect, generating a first comparison array between the first image arrays generated at the regular first intervals comprises comparing pixel voltages in only one direction.

According to a further aspect, the first and/or second frequencies can be adjusted to a predetermined frequency.

According to a further aspect, the second frequency is determined based on the determined first displacement amount.

According to a further aspect, the second predetermined duration is longer than the first predetermined duration.

According to further aspects of the current disclosure, a computer-readable storage medium and a computer program configured to carry out the above discussed methods are envisaged within the present disclosure.

### Brief description of the drawings

In the following, embodiments of the current disclosure are illustrated by making reference to the drawings, in which:
- Figure 1 shows a schematic representation of the arrangement of the elements of an optical tracking device.
- Figure 2 shows a block diagram of the different units of a device according to an embodiment of the present disclosure.
- Figure 3a shows a graph representative of the edge extraction from pixel voltages in an optical tracking device.
- Figure 3b shows a schematic representation of a comparison unit according to an embodiment of the present disclosure.
- Figure 4 shows first and second intervals for the operation of an optical device according to an embodiment of the present disclosure.
- Figure 5 shows a schematic workflow of the method according to the main embodiment of the current disclosure.

### Detailed description of the invention

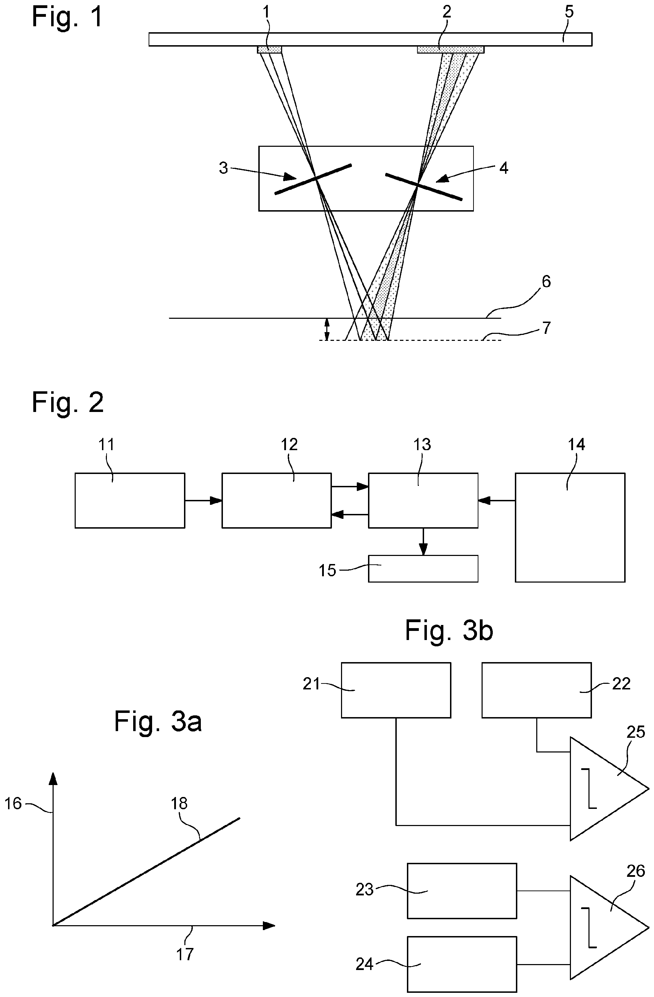

In Figure 1, a schematic representation of the arrangement of constructional elements of an optical tracking device is shown. A light source 1, e.g. a light emitting diode (LED) or laser diode or equivalent light generating source, configured to emit light towards a surface 7 and an image sensor 2, e.g. a digital camera or multi-pixel image sensor configured to receive light reflected from the surface 7. The usual construction of optical tracking devices comprises a body 6, encasing a printed circuit board 5 where the light source 1 and the image sensor 2 are mounted on, and at least one illumination lens 3 and a sensor lens 4. Body 6 is formed in such a way that the emitted and reflected light can freely impinge on surface 7 and be reflected towards the image sensor 2. However, the current disclosure is not limited to a specific constructional arrangement and can be implemented in any kind of optical tracking device.

In Figure 2 a block diagram of the different units of a device according to an embodiment of the present disclosure is shown. The device of the present disclosure comprises a light sensor controlling unit 11 operatively connected to the image sensor 2 (not shown), a comparator unit 12 connected to a processing unit 13, a light source driving unit 15 connected to the processing unit 13, and a power management unit 14.

Light sensor controlling unit 11 is configured to determining image arrays from the light received by the light sensor 2, the image arrays comprising a plurality of pixels, e.g. N x N. Pixel voltages may be generated by integrating a photogenerated current in a capacitor, as depicted by the graph depicted in Figure 3a. Over an integration time 17, a pixel voltage 16 for a pixel (i, j), i.e. in a row i and a column j, is generated, wherein the resulting voltage is depicted over time by line 18.

Comparator unit 12 is configured to determine comparison arrays between the image arrays provided by the light sensor controlling unit and its functioning will be further discussed with reference to Figure 3b. Comparator unit 12 may determine comparison arrays by comparing pixel voltages, wherein comparator unit 12, according to a further embodiment of the present disclosure, may comprise a comparing unit 25 configured to compare pixels in a first direction and a comparing unit 26, configured to compare pixels in a second direction, perpendicular to the first direction. Hence, pixel voltage 21, referring to a pixel index (i, j), wherein i refers to a row number and j to a column number, is compared to pixel voltage 22, referring to, e.g. pixel index (i+2, j) pertaining to a different row, by means of comparing unit 25. Correspondingly, comparing unit 26 is configured to compare pixel voltages 23 and 24, wherein pixel voltage 23 may refer to a pixel index (i, j) as defined before and pixel voltage 24 may refer to a pixel index (i, j+2) pertaining to a different column. Pixel comparison may be effectuated between neighbouring pixels along a row or a column, or as explained in this case between pixels separated from each other by a predetermined row or column, i.e. a distance in a first or a second direction.

Processing unit 13 is configured to produce the instructors for the different units and elements present in the optical tracking device which allows the functioning of the device according to the present disclosure. Processing unit 13 may comprise a microprocessor, a memory unit configured to store data regarding the image arrays and/or the comparison arrays and to store a computer program comprising instructions to carry out the methods disclosed according to the present disclosure as well as different units as it is customary in the field of computer and electronic device peripherals. Processing unit may further comprise a wired or wireless communication unit operatively connected to the electronic device or computer the optical tracking device serves as input device for.

Light source driving unit 15 is configured to drive the light source 1. Light source driving unit 15 may comprise the customary electronic circuits to generate light pulses at specific time intervals, hereby defining a specific frequency and duration of the light pulses.

Power management unit 14 may comprise a battery or power input connected to power management oscillators and further customary electronic circuits configured to power and operate the different units.

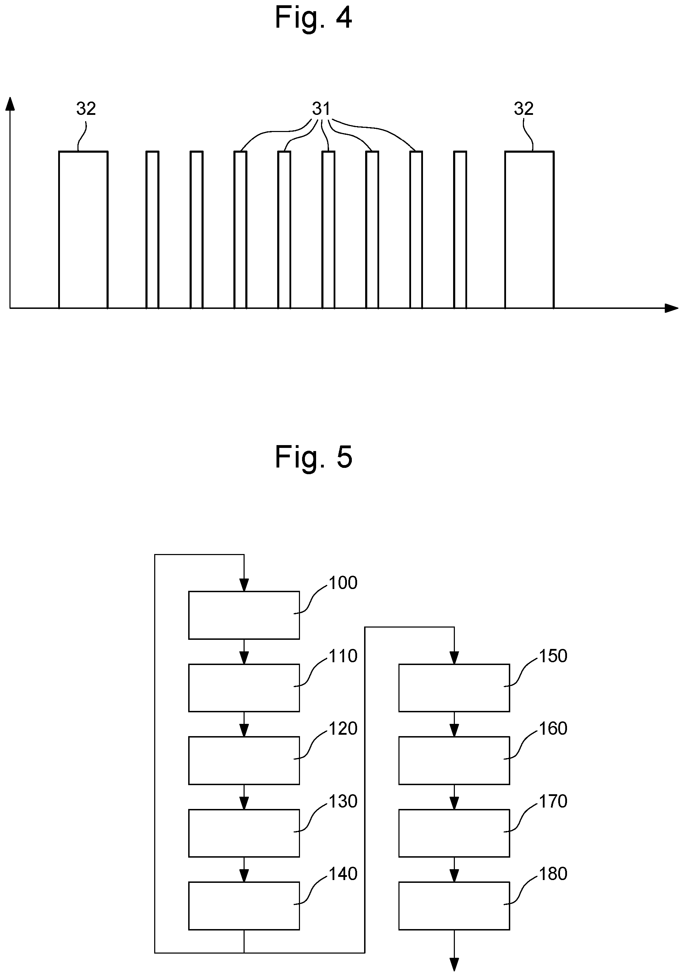

The advantages of the current disclosure will be made clear with reference to Figure 4. Light source driving unit is configured to drive the light source at regular first intervals 31, also called synchronization flashes, and at regular second intervals 32, also called regular flashes.

Synchronization flashes 31 are intended to optimize power consumption, hereby representing a limited flash energy, and merely detect an acceleration. The reduced duration of the first intervals or synchronization flashes contribute to said limited flash energy and allow the optical tracking device to improve the energy consumption.

According to a further embodiment, comparator unit comprises one comparing unit 25 configured to compare pixel voltages of the first and/or second image array in a first direction and one comparing unit 26 configured to compare pixel voltages of the first and/or second image array in a second direction, perpendicular to the first direction.

According to a further embodiment, generating a first comparison array between subsequent arrays generated at the regular first intervals comprises comparing pixel voltages in only one direction. This allows reducing the accuracy with respect to the normal operation, hereby reducing the number of operations and, while limiting the calculation to pixel integer displacement in one direction and not a full representation of the displacement, detect accelerations quicker and in an energy saving manner.

According to a further embodiment, the first and/or second frequencies can be adjusted to a predetermined first and/or second frequencies.

The first frequency may, for example, amount to as low as 500 Hz, hereby reducing energy consumption. However, different frequencies may be used.

The second frequency can be varied, as it will be explained below, for example, based on the required latency, to different polling rates can be determined (the polling rates being the inverse of the frequency), e.g. 0.0625 ms, 0.125 ms, 0.25 ms, 0.5 ms, 1 ms, hereby defining frequencies of 16 KHz, 8 KHz, 4 KHz, 2 KHz or 1 KHz.

According to a further embodiment, the second frequency is determined based on the determined first displacement amount. When the synchronization flashes 31 determine that the first displacement amount, and hereby the displacement speed is higher than a predetermined threshold (e.g. pixels divided by the first frequency), the frequency of the second intervals can be set to a higher frequency from the range defined above and herewith provide a higher accuracy and smaller latency. Hereby, a dynamic adaption of polling rate and scanning frequency can be achieved, which can improve the performance while keeping energy consumption as low as possible during the first intervals.

Figure 5 shows a schematic workflow of the method of the main embodiment of the current disclosure. While in operation, the optical tracking device emits light 100 towards a surface by means of the light source 1 at regular first intervals of a first frequency with a first predetermined duration and receives light 110 reflected from the surface towards the image sensor 2. In step 120, image arrays are determined 120 from the light received by the image sensor 2 as explained above, wherein a pixel voltage is determined for the plurality of pixels, at the regular first intervals. Subsequently, a first comparison array is generated 130 between the first image arrays generated at subsequent first intervals and a first displacement amount is determined 140 based on the first comparison array. If the first displacement amount is determined to be below a displacement amount threshold, the optical tracking device is kept at this low energy consumption mode, emitting light at the regular first intervals. When the first displacement amount is bigger than a displacement amount threshold, the method further comprises emitting 150 light towards the surface at regular second intervals of a second frequency with a second predetermined duration and determining 160 second image arrays from the light received by the image sensor at the regular second intervals, the second image arrays comprising a plurality of pixels, after which a second comparison array is generated 170 between the second image arrays generated at subsequent second intervals and a second displacement amount is determined 180 based on the second comparison array. The second displacement amount represents the travelling displacement of the optical tracking device which is consequently used by the electronic device or computer as the steering of cursors or needed operation movement in respective games or graphical user interfaces, whereby said second displacement amount is generated at a second frequency, improving the latency and increasing the responsiveness.

While the present disclosure has been illustrated by a description of various embodiments and while these embodiments have been described in considerable detail, it is not the intention of the applicant to restrict or in any way limit the scope of the appended claims to such detail. Additional advantages and modifications will readily appear to those skilled in the art. The disclosure in its broader aspects is therefore not limited to the specific details of the illustrative example shown and described. Accordingly, the detailed description thereof should not be construed as restrictive in all aspects but considered as illustrative. The scope of the disclosure should be determined by reasonable interpretation of the appended claims and all changes that come within the equivalent scope are included in the scope of the current disclosure.

## Claims

1. An optical tracking device (10) comprising:
- a light source (1) configured to emit light towards a surface (7);
- an image sensor (2) configured to receive light reflected from the surface (7);
- a processing unit (13) configured to:
o instruct a light source driving unit (15) to drive the light source to generate light at regular first intervals (31) of a first frequency with a first predetermined duration;
o instruct an image sensor controlling unit (11) to determine image arrays from the light received by the image sensor (2) at the regular first intervals, the first image arrays comprising a first plurality of pixels;
o instruct a comparator unit (12) to generate a first comparison array between the first image arrays generated at subsequent first intervals;
o determine a first displacement amount based on the first comparison array;
wherein, if the first displacement amount is bigger than a displacement amount threshold, the processing unit (13) is further configured to:
- instruct the light source driving unit (15) to drive the light source to generate light at regular second intervals (32) of a second frequency with a second predetermined duration;
- instruct the image sensor controlling unit (11) to determine second image arrays from the light received by the image sensor (2) at the regular second intervals, the second image arrays comprising a second plurality of pixels;
- instruct a comparator unit (12) to generate a second comparison array between the second image arrays generated at subsequent second intervals;
- determining a second displacement amount based on the second comparison array.

2. Device according to claim 1, wherein a comparator unit comprises one comparing unit (25) configured to compare pixel voltages of the first and/or second image array in a first direction and one comparing unit (26) configured to compare pixel voltages of the first and/or second image array in a second direction, perpendicular to the first direction.

3. Device according to any one of the preceding claims, wherein the first and/or second frequencies can be adjusted to a predetermined frequency.

4. Device according to any one of the preceding claims, wherein the second frequency is determined based on the determined first displacement amount.

5. Device according to any one of the preceding claims, wherein the second predetermined duration is longer than the first predetermined duration.

6. A method of operation of an optical tracking device (10), comprising:
- emitting (100) light towards a surface by a light source (1) at regular first intervals of a first frequency with a first predetermined duration;
- receiving (110) light reflected from the surface by an image sensor (2);
- determining (120) image arrays from the light received by the image sensor (2) at the regular first intervals (31), the image arrays comprising a first plurality of pixels;
- generating (130) a first comparison array between the first image arrays generated at subsequent first intervals;
- -determining (140) a first displacement amount based on the first comparison array;
wherein, if the first displacement amount is bigger than a displacement amount threshold, the method further comprises:
- emitting (150) light towards the surface at regular second intervals (32) of a second frequency with a second predetermined duration;
- determining (160) second image arrays from the light received by the image sensor at the regular second intervals, the second image arrays comprising a plurality of pixels;
- generating (170) a second comparison array between the second image arrays generated at subsequent second intervals;
- determining (180) a second displacement amount based on the second comparison array.

7. The method of claim 6, wherein generating a comparison array of the first and/or second image array comprises comparing a pixel voltage in a first direction and/or in a second direction, perpendicular to the first direction.

8. The method of claim 7, wherein generating a first comparison array between the first image arrays generated at the regular first intervals comprises comparing pixel voltages in only one direction.

9. The method according to any one of claims 6 to 8, wherein the first and/or second frequencies can be adjusted to a predetermined frequency.

10. The method according to any one of claims 6 to 9, wherein the second frequency is determined based on the determined first displacement amount.

11. The method according to any one of claims 6 to 10, wherein the second predetermined duration is longer than the first predetermined duration.

12. A computer-readable storage medium comprising instructions which, when executed by a computer system, cause the computer to carry out the method of any one of the claims 6 to 11.

13. A computer program product comprising instructions which, when the program is executed by a computer system, cause the computer to carry out the method of any one of the claims 6 to 11.
